# EUROPÄISCHE PATENTSCHRIFT

(11) **EP 3 137 784 B1**
(45) Veröffentlichungstag und Bekanntmachung des Hinweises auf die Patenterteilung: **14.11.2018**
(21) Anmeldenummer: 15732154.8
(22) Anmeldetag: 31.03.2015
(51) Int. Cl.: F16D 48/06, B60T 8/40, B60T 11/16, G05G 5/03, G05G 1/30

(54) **VORRICHTUNG ZUR KRAFTSIMULATION AN EINEM BETÄTIGUNGSELEMENT EINES FAHRZEUGES, VORZUGSWEISE EIN PEDALSIMULATOR, UND EINE EINRICHTUNG ZUR BETÄTIGUNG EINES ELEKTRISCHEN KUPPLUNGSSYSTEMS**
DEVICE FOR FORCE SIMULATION ON AN ACTUATING ELEMENT OF A VEHICLE, PREFERABLY A PEDAL SIMULATOR, AND MECHANISM FOR ACTUATING AN ELECTRIC CLUTCH SYSTEM
DISPOSITIF DESTINÉ À SIMULER L'APPLICATION D'UNE FORCE SUR UN ÉLÉMENT D'ACTIONNEMENT D'UN VÉHICULE, DE PRÉFÉRENCE SIMULATEUR DE PÉDALE, ET DISPOSITIF PERMETTANT D'ACTIONNER UN SYSTÈME D'EMBRAYAGE ÉLECTRIQUE

(30) Priorität: 29.04.2014 DE 102014207983
(43) Veröffentlichungstag der Anmeldung: 08.03.2017
(73) Patentinhaber: Schaeffler Technologies AG & Co. KG, 91074 Herzogenaurach (DE)
(72) Erfinder: FIORINI, Francesco Emanuele, 32758 Detmold (DE); HONSELMANN, Sebastian, 77886 Lauf (DE)
(86) Internationale Anmeldenummer: PCT/DE2015/200218
(87) Internationale Veröffentlichungsnummer: WO 2015/165453

(56) Entgegenhaltungen:
- EP-A1- 1 142 766
- DE-A1- 10 039 670
- DE-A1- 19 823 488

## Beschreibung

Die Erfindung betrifft eine Vorrichtung zur Kraftsimulation an einem Betätigungselement eines Fahrzeuges, vorzugsweise einen Pedalsimulator, welcher eine haptische Rückmeldung über ein vorgegebenes Kraft-Weg-Verhalten vermittelt, umfassend eine Kolben-Zylinder-Einheit, wobei ein Kolben über eine Kolbenstange mit dem Betätigungselement verbunden ist, welches den Kolben innerhalb des Zylinders axial bewegt sowie eine Einrichtung zur Betätigung eines elektrischen Kupplungssystems.

Aus der DE 10 2011 016 239 A1 ist ein Pedalkraftsimulator für eine Fahrzeugbremsanlage mit elektronischer Signalübertragung bekannt, bei der eine, von der Fußkraft des Fahrzeugführers abhängige Ansteuerung des Bremsmomentes, insbesondere mittels elektro-hydraulischer oder elektro-mechanischer Systeme vorgenommen wird, wobei der Pedalkraftsimulator ein für einen Fahrzeugführer gewohntes Bremsgefühl generiert. Der Pedalkraftsimulator umfasst eine pneumatisch arbeitende Kolben-Zylinder-Einheit, deren Kolben eine Kompressionskammer mit einem ansteuerbaren Ventil begrenzt und entgegen der Kompressionsrichtung mittels zumindest eines ersten Federelementes den Kolben mit einer Kraft belastet sowie über eine Kolbenstange mit einem Fahrzeugbremspedal derart verbunden ist, dass die Kolbenstange während der Betätigung des Fahrzeugbremspedals eine Winkeländerung relativ zur Kolben-Zylinder-Einheit erfährt. Diese Winkelbeweglichkeit stellt hohe Anforderung an die Konstruktion des Pedalkraftsimulators.

Die EP 1 142 766 A1 offenbart einen Fahrpedalsimulator mit einem in Abhängigkeit der Betätigungskraft und des Betätigungswegs variablen Strömungswiderstand.

Die DE 10 2010 061 439 A1 offenbart ein Bremssystem für ein Kraftfahrzeug, bei welchem ein Bremspedal, das von einem Fahrzeugführer betätigbar ist, mit einem Pedalsimulator zur Erzeugung einer wegabhängigen Gegen- bzw. Rückstellkraft verbunden ist. Die Stellung des Bremspedals wird mittels eines Sensors erfasst und dessen Sensorsignal dem Steuergerät zur Auswertung zugeführt. Entsprechend der Stellung des Bremspedals erzeugt das Steuergerät Steuersignale für eine Antriebssteuereinheit und eine Bremssteuereinheit, so dass ein dadurch erzeugter generatorischer Bremsanteil zusammen mit dem Reibungsbremsanteil ein Bremsmoment bzw. eine Bremswirkung erzeugt, die der Stellung des Bremspedals entspricht. Gleichzeitig wird der Pedalsimulator von dem Steuergerät derart angesteuert, dass auf das Bremspedal eine Gegenkraft bzw. Rückstellkraft wirkt, sich also eine Weg-Kraft-Abhängigkeit einstellt, die dem Fahrer ein Pedalgefühl wie bei einer Bremsung ausschließlich mit einer hydraulischen Bremsanlage gibt.

Der Erfindung liegt die Aufgabe zugrunde, eine Vorrichtung zur Kraftsimulation an einem Betätigungselement eines Fahrzeuges anzugeben, welche dem Fahrzeugführer das gleiche Gefühl übermittelt wie bei einer normalen hydraulischen Anlage und welche trotzdem einfach herstellbar ist.

Diese Aufgabe wird durch eine Vorrichtung mit den Merkmalen gemäß Anspruch 1 sowie eine Einrichtung mit den Merkmalen gemäß Anspruch 9 gelöst.

Erfindungsgemäß wird die Aufgabe also dadurch gelöst, dass in dem Zylinder ein annähernd rundes Widerstandselement radial hineinragt, welches den Zylinder in zwei Hohlräume unterteilt, die beide mit einem Medium gefüllt sind und das Widerstandselement eine Öffnung mit einem variablen Durchmesser aufweist, der sich in Abhängigkeit von einer Betätigungsgeschwindigkeit des Betätigungselementes verändert, wodurch das Medium mit einem variablen Volumendruck durch den Kolben von dem ersten Hohlraum in den zweiten Hohlraum gedrückt wird. Dies hat den Vorteil, dass auch bei einem nicht hydraulischen Betätigungssystem, insbesondere einem rein elektrischen Fahrzeugkupplungssystem, dem Fahrzeugführer das gleiche Gefühl übermittelt wird wie bei einem normalen hydraulischen Betätigungssystem. Die Vorrichtung zur Kraftsimulation simuliert dabei eine Kraft-Weg-Kennlinie, wobei die Kraft, welche am Fuß oder an der Hand des Fahrzeugnutzers über das Betätigungselement angreift, in Abhängigkeit des durch den Kolben zurückgelegten Weges hervorgerufen wird. Insbesondere wird die Kraft dabei durch den Durchmesser des Widerstandselementes bestimmt, welche in Abhängigkeit von der Betätigungsgeschwindigkeit und dem zurückgelegten Weg bestimmt wird. So wird eine große Kraft benötigt, wenn die Öffnung relativ klein ist und sich das durch den Kolben verdrängte Flüssigkeitsvolumen nur langsam vom ersten Hohlraum in den zweiten Hohlraum bewegt. Im Gegensatz dazu liegt eine geringe Kraft an, wenn bei einer großen Öffnung das Flüssigkeitsvolumen sich mit einer großen Geschwindigkeit zwischen den beiden Hohlräumen bewegt. Die Größe der Vorrichtung zur Kraftsimulation entspricht dabei der Größe eines Geberzylinders bei einem hydraulischen Kupplungsbetätigungssystem, so dass keine weiteren Anforderungen an den Platzbedarf im Kraftfahrzeug gestellt werden, weshalb der Kraftsimulator anstelle des Geberzylinders an derselben Stelle im Kraftfahrzeug eingebaut werden kann. Unter einem Widerstandselement soll im Weiteren ein in das Medium hineinragender Vorsprung verstanden werden, welcher dem Medium einen mechanischen Widerstand entgegensetzt.

Das Widerstandselement weist eine, die Öffnung umgebende dehnbare Begrenzung zur Einstellung des Durchmessers der Öffnung auf. Durch diese dehnbare Begrenzung lässt sich der Durchmesser in Abhängigkeit der Betätigungsgeschwindigkeit und des Weges des Betätigungselementes vergrößern oder verkleinern, wonach je nach Größe des Durchmessers durch das, durch die Öffnung strömende Medium ein Kraftunterschied erzeugt wird, welcher am Betätigungselement haptisch durch den Fahrzeugführer spürbar ist.

In einer Ausgestaltung ist die dehnbare Begrenzung als Membran ausgebildet, welche die mit einer Flüssigkeit gefüllte Kammer umschließt, welche über eine, an dem oder durch das Widerstandselement geführten Flüssigkeitsleitung in Abhängigkeit der Betätigungsgeschwindigkeit des Betätigungselementes mit der Flüssigkeit gefüllt wird. Eine solche Ausbildung der dehnbaren Begrenzung als Membran ist besonders einfach herstellbar, wobei die Flüssigkeit, mit der die von der Membran umgebene Kammer gefüllt ist, einfach in ihrem Volumen in der Kammer kontrollierbar ist.
In einer Variante pumpt ein von einer Flüssigkeitssteuereinheit angesteuertes Stellglied die Flüssigkeit in Abhängigkeit von der Betätigungsgeschwindigkeit in die Kammer, wodurch eine Ausdehnung der Membran variiert und somit eine Vergrößerung oder eine Verringerung des Durchmessers der Öffnung des Widerstandselementes einstellbar ist. Mittels einer solchen Flüssigkeitssteuereinheit, welche mittels eines vom Betätigungselement zurückgelegten Weges und/oder der Betätigungsgeschwindigkeit des Betätigungselementes das Volumen der Flüssigkeit in der Kammer steuert, ist die Ausdehnung der Membran und somit die Größe des Durchmessers der Öffnung des Widerstandselementes besonders feinfühlig einstellbar.
Vorteilhafterweise ist die Flüssigkeitssteuereinheit außerhalb des Zylinders angeordnet. Dadurch wird gewährleistet, dass die Baugröße der Vorrichtung zur Kraftsimulation den eines Geberzylinders einer hydraulischen Betätigungseinrichtung nicht überschreitet und die Flüssigkeitssteuereinheit an einer beliebigen Position im Kraftfahrzeug angeordnet werden kann.

In einer weiteren Ausführungsform ist an einer, dem Kolben gegenüberliegenden Seite des Zylinders ein Trennkolben im zweiten Hohlraum positioniert, welcher über ein Federelement an einer Innenwandung des Zylinders angreift. Dadurch wird sichergestellt, dass bei einem Angreifen eines inkompressiblen Mediums der Trennkolben in seiner Position nachgibt und so der Raum für das im ersten Hohlraum verdrängte Volumen des Mediums im zweiten Hohlraum geschaffen wird. Strömt das Medium wieder zurück in den ersten Hohlraum, so drückt das Federelement den Trennkolben wieder in seine Ausgangsposition.

Vorteilhafterweise ist das inkompressible Medium eine Hydraulikflüssigkeit, die durch den Kolben von dem ersten in den zweiten Hohlraum gedrückt wird. Aufgrund der inkompressiblen Eigenschaft der Hydraulikflüssigkeit entsteht eine Gegenkraft, welche durch den Fahrzeugführer am Betätigungselement, vorzugsweise einem Fahrpedal, sicher fühlbar ist.

In einer weiteren Ausgestaltung sind der erste und der zweite Hohlraum über ein außerhalb des Zylinders angeordnetes Druckventil miteinander verbunden, wobei das Druckventil öffnet, wenn das vorzugsweise inkompressible Medium vom zweiten in den ersten Hohlraum strömt und schließt, wenn das Medium von dem ersten in den zweiten Hohlraum fließt. Mittels dieses Druckventils wird sichergestellt, dass bei Betätigung des Betätigungselementes durch den Fahrzeugnutzer das Medium lediglich durch die Öffnung des Widerstandselementes strömt. Dadurch wird das entsprechende haptische Empfinden des Fahrzeugführers eingestellt.

In einer anderen Variante sind die Kolbenstange und der Zylinder, zumindest teilweise, mit einer Rückstellfeder verbunden, so dass bei Nachlassen der Betätigung des Betätigungselementes durch den Fahrzeugnutzer das Betätigungselement wieder in seine ursprüngliche Stellung zurückkehren kann.

Eine Weiterbildung der Erfindung betrifft eine Einrichtung zur Betätigung eines elektrischen Kupplungssystems, bei welchem ein Betätigungselement mit einer Vorrichtung zur Kraftsimulation an dem Betätigungselement verbunden ist, wobei die Stellung des Betätigungselementes von einer Sensoreinheit erfasst und elektrisch an eine Steuereinheit weitergegeben wird, welche mit einer Kupplung in einer Wirkverbindung steht. Die Vorrichtung zur Kraftsimulation ist dabei nach mindestens einem der in dieser Schutzrechtsanmeldung ausgeführten Merkmale ausgebildet. Dies hat den Vorteil, dass bei einem elektrischen Kupplungssystem an dem Betätigungselement von dem Fahrzeugführer genau dieselbe Kraft wahrgenommen wird, wie bei einem hydraulischen oder pneumatischen Kupplungssystem.

Vorteilhafterweise ist die Steuereinheit über eine Flüssigkeitssteuereinheit, die ein Stellglied ansteuert, mit einer dehnbaren Begrenzung des Widerstandselementes verbunden. Durch diese Verbindung wird eine zuverlässige Ausdehnung der dehnbaren Begrenzung in Abhängigkeit von dem Betätigungsdruck des Betätigungselementes eingestellt.

Vorteilhafterweise weist die Steuereinheit eine als Aktor ausgebildete Leistungseinheit zur Ansteuerung der Kupplung auf, welche mit der Kupplung mechanisch oder hydraulisch oder pneumatisch gekoppelt ist. Somit ist die Vorrichtung zur Kraftsimulation an einem Betätigungselement eines Fahrzeuges in einer beliebigen Form der Betätigungselemente einsetzbar.

Die Erfindung lässt zahlreiche Ausführungsformen zu. Eine davon soll anhand der in der Zeichnung dargestellten Figuren näher erläutert werden.

Es zeigen:
- Figur 1:: eine Prinzipdarstellung eines elektro-hydraulischen Kupplungsbetätigungssystems,
- Figur 2:: ein Ausführungsbeispiel für einen Pedalsimulator des elektro-hydraulischen Kupplungsbetätigungssystems gemäß Figur 1,
- Figur 3:: ein Ausführungsbeispiel einer dehnbaren Begrenzung des Widerstandselementes.

Gleiche Merkmale sind mit gleichen Bezugszeichen gekennzeichnet.

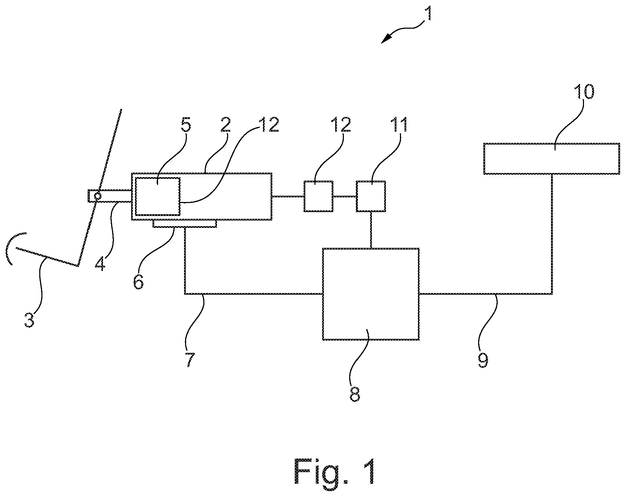

In Figur 1 ist eine Prinzipdarstellung eines elektro-hydraulischen Kupplungsbetätigungssystems dargestellt, welches auch als clutch-by-wire-System bezeichnet wird. Das elektrohydraulische Kupplungsbetätigungssystem 1 umfasst einen Pedalsimulator 2, der mechanisch mit einem Kupplungspedal 3 verbunden ist. Das Kupplungspedal 3 betätigt über eine Kolbenstange 4 einen, in dem Pedalsimulator 2 axial beweglich gelagerten Kolben 5. Die Bewegung des Kolbens 5 wird durch eine Wegsensoreinheit 6 detektiert, die mit dem Pedalsimulator 2 verbunden und vorzugsweise in diesem integriert ist. Über eine elektrische Leitung 7 ist die Wegsensoreinheit 6 mit einer Steuer- und Leistungseinheit 8 verbunden. Neben der Steuerelektronik umfasst die Steuer- und Leistungseinheit 8 einen Aktor, welcher über eine weitere Leitung 9 die Kupplung 10 ansteuert. Die Leitung 9 ist im vorliegenden Fall als hydraulische Leitung ausgebildet. Die Ansteuerung der Kupplung 10 kann alternativ aber auch pneumatisch oder mechanisch erfolgen. Darüber hinaus ist die Steuer- und Leistungseinheit 8 elektrisch mit einer Flüssigkeitssteuereinheit 11 verbunden, welche ein Stellglied 12 ansteuert, das an den Pedalsimulator 2 führt.

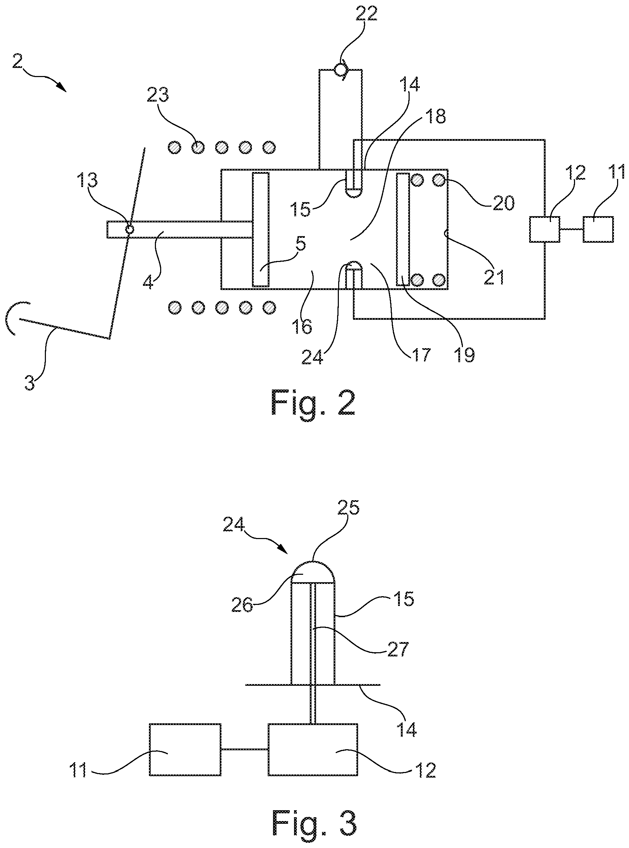

In Figur 2 ist ein Ausführungsbeispiel des Pedalsimulators 2 gezeigt, wie dieser in dem Kupplungsbetätigungssystem 1 gemäß Figur 1 verwendet wird. Das Kupplungspedal 3 ist über einen Anschluss 13 an der Kolbenstange 4 befestigt. Innerhalb eines Zylinders 14 wird der Kolben 5 über die Kolbenstange 4 in Abhängigkeit von der Stellung des Kupplungspedals 3 axial bewegt. Der Zylinder 14 weist an einem Ende ein Führungselement auf, beispielsweise eine Dichtung oder eine Wandöffnung, in welcher die Kolbenstange 4 axial gelagert ist. Am Vorderende der Kolbenstange 4 ist der Kolben 5 mit dieser verbunden und an einer Zylinderinnenwand umfangsseitig geführt. In dem Zylinder 14 ist annähernd mittig ein rundes Widerstandselement 15 angeordnet, das den Innenraum des Zylinders 14 in zwei Hohlräume 16, 17 unterteilt. Der Kolben 5 bewegt sich dabei axial im ersten Hohlraum 16 des Zylinders 14. Das Widerstandselement 15 weist eine Öffnung 18 auf, welche einen variablen Durchmesser besitzt, der bei der Betätigung des Kupplungspedals 3 verändert wird. Auf der zum Kolben 5 entgegengesetzten Seite des Zylinders 14 ist ein Trennkolben 19 im zweiten Hohlraum 17 angeordnet, welcher ebenfalls gleitend axial beweglich am Zylinder 14 gelagert ist und über eine Innenfeder 20 an einer Innenwand 21 des Zylinders 14 anliegt.

Die Hohlräume 16 und 17 sind mit einer hydraulischen Flüssigkeit gefüllt. Ein Druckventil 22, welches das Widerstandselement 15 umgeht und außerhalb des Zylinders 14 angeordnet ist, verbindet die Hohlräume 16, 17 miteinander, wobei das Druckventil 22 so angeordnet ist, dass es geschlossen ist, wenn die hydraulische Flüssigkeit von dem ersten Hohlraum 16 durch den Kolben 5 in den zweiten Hohlraum 17 gedrückt wird. Dieses Druckventil 22 ist geöffnet, wenn die hydraulische Flüssigkeit aus dem zweiten Hohlraum 16 in den ersten Hohlraum 15 zurückfließt. Um die Kolbenstange 4 und den Zylinder 14 ist teilweise eine Rückstellfeder 23 angeordnet.

Das Widerstandselement 15 ist näher in Fig. 3 dargestellt. Dabei weist das Widerstandselement 15 eine flexible Begrenzung 24 auf, welche aus einer Membran 25 besteht, die eine Kammer 26 umschließt. Innerhalb der Kammer 26 ist eine weitere Flüssigkeit, vorzugsweise eine hydraulische Flüssigkeit, angeordnet, die von dem Stellglied 12 über eine Flüssigkeitsleitung 27 in die Kammer 26 gefördert wird. Das Stellglied 12 wird dabei von der Flüssigkeitssteuereinheit 11 angesteuert, welche beispielsweise ein Motor ist, während das Stellglied 12 vorteilhafterweise als Kolben ausgebildet ist.

Der beschriebene Pedalsimulator funktioniert wie folgt: Bei einer Betätigung des Kupplungspedals 3 wird die Pedalbewegung über den Anschluss 13 in eine entsprechende Vorschubbewegung der Kolbenstange 4 umgesetzt. Hierbei wird zum einen die Rückstellfeder 23 zusammengedrückt und gespannt, wodurch eine rückstellende Reaktionskraft entsteht. Außerdem wird der an der Kolbenstange 4 befestigte Kolben 5 gegenüber dem ortsfest gelagerten Zylinder 14 innerhalb diesem vorwärtsbewegt. Die Steuer- und Leistungseinheit 8 bestimmt aus einem Zeitraum, in welchem das Betätigungselement 3 einen vorgegebenen Weg zurücklegt, die Betätigungsgeschwindigkeit, welche an die Flüssigkeitssteuereinheit 11 ausgegeben wird. In Abhängigkeit von den, durch die Flüssigkeitssteuereinheit 11 abgegebenen Stellbefehlen pumpt das Stellglied 12 in Abhängigkeit von der Betätigungsgeschwindigkeit des Kupplungspedals 3 Flüssigkeit in die Kammer 26 und verursacht eine Ausdehnung der Membran 25, die eine optimale Verengung der Öffnung 18 einstellt. Hierbei strömt dann die Hydraulikflüssigkeit entlang der Verengung, die eine Reduzierung des von der ersten Hydraulikflüssigkeit durchströmten Volumens und damit eine von den Abmessungen der Verengung der Öffnung 18 und die durchflussabhängige Veränderung der Druckverhältnisse im Inneren des Zylinders 14 bewirkt. Das Widerstandselement 15 mit der dehnungsfähigen Begrenzung 24, welche einen variablen Querschnitt der Öffnung 18 ermöglicht, kann auch über eine Iris mit einem variablen Querschnitt alternativ ausgestattet sein, welche z.B. mit einem elektrischen, pneumatischen oder piezoelektrischen Stellmotor gesteuert werden kann.

Aufgrund des veränderten Durchmessers der Öffnung 18 wird ein mehr oder weniger großes Volumen der hydraulischen Flüssigkeit durch die Öffnung 18 vom ersten Hohlraum 16 in den zweiten Hohlraum 17 verdrängt. Gleichzeitig verursacht das über den Kolben 5 verdrängte Flüssigkeitsvolumen eine Bewegung des Trennkolbens 19, welcher gegen die innenliegende Feder 20 gedrückt wird und dabei das in dem ersten Hohlraum 16 verdrängte Volumen für die hydraulische Flüssigkeit in dem zweiten Hohlraum 17 bereitstellt.

Der beschriebene Pedalsimulator 2 ist für ein nicht hydraulisches Betätigungssystem, insbesondere ein rein elektrisches Fahrzeugkupplungssystem vorgesehen. Er kann alternativ aber auch für beliebige andere Betätigungssysteme, wie beispielsweise Bremssysteme, eingesetzt werden, die auch statt eines Pedals ein beliebig anderes Betätigungselement aufweisen können.

### Bezugszeichenliste

- 1: elektro-hydraulisches Kupplungsbetätigungssystem
- 2: Pedalsimulator
- 3: Kupplungspedal
- 4: Kolbenstange
- 5: Kolben
- 6: Wegsensoreinheit
- 7: Elektrische Leitung
- 8: Steuer- und Leistungseinheit
- 9: Leitung
- 10: Kupplung
- 11: Flüssigkeitssteuereinheit
- 12: Stellglied
- 13: Anschluss
- 14: Zylinder
- 15: Widerstandselement
- 16: Erster Hohlraum
- 17: Zweiter Hohlraum
- 18: Öffnung
- 19: Trennkolben
- 20: Innenfeder
- 21: Innenwand
- 22: Druckventil
- 23: Rückstellfeder
- 24: Flexible Begrenzung
- 25: Membran
- 26: Kammer
- 27: Flüssigkeitsleitung

## Patentansprüche

1. Vorrichtung zur Kraftsimulation an einem Betätigungselement eines Fahrzeuges, vorzugsweise ein Pedalsimulator, welcher eine haptische Rückmeldung über ein vorgegebenes Kraft-Weg-Verhalten vermittelt, umfassend eine Kolben-Zylinder-Einheit (5, 14), wobei ein Kolben (5) über eine Kolbenstange (4) mit dem Betätigungselement (3) verbunden ist, welches den Kolben (5) innerhalb des Zylinders (14) axial bewegt, wobei in dem Zylinder (14) ein Widerstandselement (15) radial hineinragt, welches den Zylinder (14) in zwei Hohlräume (16, 17) unterteilt, die beide mit einem Medium gefüllt sind, wobei das Medium durch den Kolben (5) von dem ersten Hohlraum (16) in den zweiten Hohlraum (17) gedrückt wird, wobei das Widerstandselement (15) annähernd rund ist und eine Öffnung (18) mit einem variablen Durchmesser aufweist, der sich in Abhängigkeit von einer Betätigungsgeschwindigkeit des Betätigungselementes (3) verändert, wodurch das Medium mit einem variablen Volumen durch den Kolben (5) von dem ersten Hohlraum (16) in den zweiten Hohlraum (17) gedrückt wird, **dadurch gekennzeichnet, dass** das Widerstandselement (15) eine die Öffnung (18) umgebende dehnbare Begrenzung (24), welche eine mit variabler Flüssigkeitsmenge befüllbare Kammer (26) umschließt, zur Einstellung des Durchmessers der Öffnung (18) aufweist, um den Durchströmungsquerschnitt zu variieren.

2. Vorrichtung nach Anspruch 1, **dadurch gekennzeichnet, dass** die dehnbare Begrenzung (24) als Membran (25) ausgebildet ist, welche die mit der Flüssigkeit gefüllte Kammer (26) umschließt, die über eine, an dem oder durch das Widerstandselement (15) geführte Flüssigkeitsleitung (27) in Abhängigkeit der Betätigungsgeschwindigkeit des Betätigungselementes (3) mit der Flüssigkeit füllbar ist.

3. Vorrichtung nach Anspruch 1 oder 2, **dadurch gekennzeichnet, dass** ein von einer Flüssigkeitssteuerung (11) angesteuertes Stellglied (12) die Flüssigkeit in Abhängigkeit von der Betätigungsgeschwindigkeit in die Kammer (26) pumpt, wodurch eine Ausdehnung der Membran (25) veränderbar ist und somit eine Vergrößerung oder eine Verringerung des Durchmessers der Öffnung (18) des Widerstandselementes (15) einstellbar ist.

4. Vorrichtung nach Anspruch 3, **dadurch gekennzeichnet, dass** die Flüssigkeitssteuereinheit (11) außerhalb des Zylinders (14) angeordnet ist.

5. Vorrichtung nach mindestens einem der vorhergehenden Ansprüche, **dadurch gekennzeichnet, dass** an einer dem Kolben (5) gegenüberliegenden Seite des Zylinders (14) ein Trennkolben (19) im zweiten Hohlraum (17) positioniert ist, welcher über ein Federelement (20) an einer Innenwandung (21) des Zylinders (14) angreift.

6. Vorrichtung nach mindestens einem der vorhergehenden Ansprüche, **dadurch gekennzeichnet, dass** der erste (16) und der zweite Hohlraum (17) über ein außerhalb des Zylinders (14) angeordnetes Druckventil (22) miteinander verbunden sind, wobei das Druckventil (22) öffnet, wenn das vorzugsweise inkompressible Medium vom zweiten (17) in den ersten Hohlraum (16) strömt und schließt, wenn das Medium von dem ersten (16) in den zweiten Hohlraum (17) fließt.

7. Vorrichtung nach mindestens einem der vorhergehenden Ansprüche, **dadurch gekennzeichnet, dass** die Kolbenstange (4) und der Zylinder (14) zumindest teilweise mit einer Rückstellfeder (23) verbunden sind.

8. Einrichtung zur Betätigung eines elektrischen Kupplungssystems, bei welchem ein Betätigungselement (3) mit einer Vorrichtung (2) zur Kraftsimulation an dem Betätigungselement (3) verbunden ist, wobei die Stellung des Betätigungselementes (3) von einer Sensoreinheit (6) erfasst und elektrisch an eine Steuereinheit (8) weitergegeben wird, welche mit einer Kupplung (10) in einer Wirkverbindung steht, **dadurch gekennzeichnet, dass** die Vorrichtung (2) zur Kraftsimulation nach mindestens einem der vorhergehenden Ansprüche 1 bis 7 ausgebildet ist.

9. Einrichtung nach Anspruch 8, **dadurch gekennzeichnet, dass** die Steuereinheit (8) über eine Flüssigkeitssteuereinheit (11), die ein hydraulisches Stellglied (12) ansteuert, mit einer dehnbaren Begrenzung (24) des Widerstandselementes (15) verbunden ist.

## Claims

1. Apparatus for force simulation on an actuating element of a vehicle, preferably a pedal simulator which conveys a haptic feedback via a predefined force-displacement behaviour, comprising a piston/cylinder unit (5, 14), a piston (5) being connected via a piston rod (4) to the actuating element (3) which moves the piston (5) axially within the cylinder (14), a resistance element (15) protruding radially into the cylinder (14), which resistance element (15) divides the cylinder (14) into two hollow spaces (16, 17) which are both filled with a medium, the medium being pressed by way of the piston (5) from the first hollow space (16) into the second hollow space (17), the resistance element (15) being approximately round and having an opening (18) with a variable diameter which changes in a manner which is dependent on an actuating speed of the actuating element (3), as a result of which the medium is pressed with a variable volume by way of the piston (5) from the first hollow space (16) into the second hollow space (17), **characterized in that** the resistance element (15) has a flexible boundary (24), which surrounds the opening (18) and encloses a chamber (26) which can be filled with a variable liquid quantity, for setting the diameter of the opening (18), in order to vary the throughflow cross section.

2. Apparatus according to Claim 1, **characterized in that** the flexible boundary (24) is configured as a diaphragm (25) which encloses the chamber (26) filled with the liquid, which chamber can be filled with the liquid in a manner which is dependent on the actuating speed of the actuating element (3), via a liquid line (27) which is guided on or through the resistance element (15).

3. Apparatus according to Claim 1 or 2, **characterized in that** an actuator (12) which is actuated by a liquid controller (11) pumps the liquid into the chamber (26) in a manner which is dependent on the actuating speed, as a result of which an expansion of the diaphragm (25) can be changed and therefore an increase or a decrease of the diameter of the opening (18) of the resistance element (15) can be set.

4. Apparatus according to Claim 3, **characterized in that** the liquid control unit (11) is arranged outside the cylinder (14).

5. Apparatus according to at least one of the preceding claims, **characterized in that** a separating piston (19) is positioned in the second hollow space (17) on a side of the cylinder (14) which lies opposite the piston (5), which separating piston (19) acts via a spring element (20) on an inner wall (21) of the cylinder (14).

6. Apparatus according to at least one of the preceding claims, **characterized in that** the first hollow space (16) and the second hollow space (17) are connected to one another via a pressure valve (22) which is arranged outside the cylinder (14), the pressure valve (22) opening when the preferably incompressible medium flows from the second hollow space (17) into the first hollow space (16) and closing when the medium flows from the first hollow space (16) into the second hollow space (17).

7. Apparatus according to at least one of the preceding claims, **characterized in that** the piston rod (4) and the cylinder (14) are connected at least partially to a restoring spring (23).

8. Device for actuating an electric clutch system, in which an actuating element (3) is connected to an apparatus (2) for force simulation on the actuating element (3), the position of the actuating element (3) being detected by a sensor unit (6) and being forwarded electrically to a control unit (8) which is operatively connected to a clutch (10), **characterized in that** the apparatus (2) for force simulation is configured according to at least one of the preceding Claims 1 to 7.

9. Device according to Claim 8, **characterized in that** the control unit (8) is connected to a flexible boundary (24) of the resistance element (15) via a liquid control unit (11) which actuates a hydraulic actuator (12).

## Revendications

1. Dispositif destiné à simuler l'application d'une force à un élément d'actionnement d'un véhicule, de préférence un simulateur de pédale, qui transmet une réponse tactile par un comportement force-course prédéterminé, comprenant une unité piston-cylindre (5, 14), dans lequel un piston (5) est relié par une tige de piston (4) à l'élément d'actionnement (3), qui déplace le piston (5) axialement à l'intérieur du cylindre (14), dans lequel un élément de résistance (15) pénètre radialement dans le cylindre (14) et divise le cylindre (14) en deux cavités (16, 17), qui sont toutes les deux remplies avec un milieu, dans lequel le milieu est comprimé par le piston (5) de la première cavité (16) dans la seconde cavité (17), dans lequel l'élément de résistance (15) est approximativement rond et présente une ouverture (18) de diamètre variable, qui varie en fonction de la vitesse d'actionnement de l'élément d'actionnement (3), le milieu étant ainsi comprimé avec un volume variable par le piston (5) de la première cavité (16) dans la seconde cavité (17), **caractérisé en ce que** l'élément de résistance (15) présente une limitation déformable (24) entourant l'ouverture (18), qui entoure une chambre (26) pouvant être remplie avec une quantité variable de liquide, pour le réglage du diamètre de l'ouverture (18) afin de faire varier la section transversale d'écoulement.

2. Dispositif selon la revendication 1, **caractérisé en ce que** la limitation déformable (24) est réalisée sous la forme d'une membrane (25), qui entoure la chambre (26) remplie du liquide, qui peut être remplie avec le liquide par l'intermédiaire d'une conduite de liquide (27) menée à travers l'élément de résistance (15) en fonction de la vitesse d'actionnement de l'élément d'actionnement (3).

3. Dispositif selon la revendication 1 ou 2, **caractérisé en ce qu'**un organe de réglage (12) commandé par une commande de liquide (11) pompe le liquide dans la chambre (26) en fonction de la vitesse d'actionnement, ce qui permet de changer une déformation de la membrane (25) et ainsi de régler une augmentation ou une diminution du diamètre de l'ouverture (18) de l'élément de résistance (15).

4. Dispositif selon la revendication 3, **caractérisé en ce que** l'unité de commande de liquide (11) est disposée à l'extérieur du cylindre (14).

5. Dispositif selon au moins une des revendications précédentes, **caractérisé en ce qu'**un piston de séparation (19) est positionné dans la seconde cavité (17) sur un côté du cylindre (14) opposé au piston (5), et agit par un élément de ressort (20) sur une paroi intérieure (21) du cylindre (14).

6. Dispositif selon au moins une des revendications précédentes, **caractérisé en ce que** la première (16) et la seconde (17) cavités sont raccordées l'une à l'autre par une soupape de pression (22) disposée à l'extérieur du cylindre (14), dans lequel la soupape de pression (22) s'ouvre lorsque le milieu de préférence incompressible s'écoule de la seconde cavité (17) à la première cavité (16) et se ferme lorsque le milieu s'écoule de la première cavité (16) à la seconde cavité (17).

7. Dispositif selon au moins une des revendications précédentes, **caractérisé en ce que** la tige de piston (4) et le cylindre (14) sont reliés au moins en partie par un ressort de rappel (23).

8. Dispositif permettant d'actionner un système d'embrayage électrique, dans lequel un élément d'actionnement (3) est relié à un dispositif (2) destiné à simuler l'application d'une force à l'élément d'actionnement (3), dans lequel la position de l'élément d'actionnement (3) est détectée par une unité de capteur (6) et est retransmise électriquement à une unité de commande (8), qui est en liaison active avec un embrayage (10), **caractérisé en ce que** le dispositif (2) destiné à simuler l'application d'une force est réalisé selon au moins une des revendications précédentes 1 à 7.

9. Dispositif selon la revendication 8, **caractérisé en ce que** l'unité de commande (8) est raccordée à une limitation déformable (24) de l'élément de résistance (15) par une unité de commande de liquide (11), qui commande un organe de réglage hydraulique (12).
